# DEMANDE DE BREVET EUROPEEN

(11) **EP 4 428 007 A1**
(43) Date de publication de la demande: **11.09.2024**
(21) Numéro de dépôt: 24161647.3
(22) Date de dépôt: 06.03.2024
(51) Int. Cl.: B61D 27/00, B60H 1/00

(54) **VÉHICULE COMPRENANT UN GROUPE DE TRAITEMENT D'AIR, UN SYSTÈME DE DIFFUSION D'AIR ET UN SYSTÈME DE REPRISE D'AIR**

(30) Priorité: 06.03.2023 FR 2302061
(71) Demandeur: ALSTOM Holdings, 93400 Saint-Ouen-sur-Seine (FR)
(72) Inventeur: DO, Huu-thi, 17300 ROCHEFORT (FR)
(74) Mandataire: Lavoix

(57) **Abrégé**

Véhicule (1), notamment véhicule ferroviaire, comprenant un toit (2) et une salle de passagers (3) pour des passagers, le véhicule (1) comprenant en outre un plafond (4) délimitant la salle de passagers (3), un espace (14) étant défini entre le toit (2) et le plafond (4), le véhicule (1) comprenant en outre au moins un groupe de traitement d'air (6) agencé sur le toit (2),
le véhicule (1) comprenant en outre un système de diffusion d'air (8) agencé dans ledit espace (14) apte à diffuser de l'air provenant du groupe de traitement d'air (6) dans la salle de passagers (3), le véhicule (1) comprenant en outre un système de reprise d'air (10) apte à conduire de l'air de la salle de passagers (3) au groupe de traitement d'air (6) pour un traitement.

## Description

La présente invention concerne un véhicule, notamment un véhicule ferroviaire, comprenant au moins un groupe de traitement d'air, un système de diffusion d'air et un système de reprise d'air.

La présente invention concerne le domaine du traitement d'air pour des véhicules, tels que des véhicules ferroviaires.

De manière connue en soi, certains véhicules comprennent un ou plusieurs groupes de traitement d'air configurés pour chauffer, ventiler et climatiser des véhicules par de l'air, par exemple pour l'alimentation avec de l'air de la cabine de conducteur ou des salles de passagers du véhicule. De tels groupes de traitement d'air sont également connus sous le sigle CVC (de « Chauffage Ventilation et Climatisation ») ou HVAC (de l'anglais « Heating, Ventilation and Air-Conditioning » pour chauffage, ventilation et climatisation).

Lors de la diffusion de l'air et/ou de la reprise d'air à partir des salles de passagers par exemple, il convient de respecter un certain nombre de contraintes afin d'assurer le confort des passagers. Par exemple, les conduits d'air sont arrangés de manière à diffuser de l'air dans des zones souhaitées.

Dans certains cas, des nuisances sonores du groupe de traitement sont susceptibles de restreindre le confort des passagers. En particulier, des groupes de traitement d'air comprennent généralement au moins un ventilateur qui génère du bruit lors de son opération.

Par conséquent, de tels systèmes avec des groupes de traitement d'air pour des véhicules peuvent encore être améliorés.

Un but de la présente invention est alors de remédier au moins en partie aux inconvénients précités.

En particulier, un but de l'invention est d'obtenir un véhicule comprenant au moins un groupe de traitement d'air, qui permet d'augmenter le confort des passagers. Aussi, un but de la présente invention est d'obtenir un véhicule qui est particulièrement simple à construire.

À cet effet, l'invention concerne un véhicule, notamment véhicule ferroviaire, comprenant un toit et une salle de passagers pour des passagers, le véhicule comprenant en outre un plafond délimitant la salle de passagers, un espace étant défini entre le toit et le plafond, le véhicule comprenant en outre au moins un groupe de traitement d'air agencé sur le toit,
le véhicule comprenant en outre un système de diffusion d'air agencé dans ledit espace apte à diffuser de l'air provenant du groupe de traitement d'air dans la salle de passagers, le véhicule comprenant en outre un système de reprise d'air apte à conduire de l'air de la salle de passagers au groupe de traitement d'air pour un traitement,
le système de reprise d'air comprenant au moins un conduit de retour agencé dans ledit espace, une première ouverture reliant la salle de passagers à une première extrémité dudit conduit de retour, et une seconde ouverture reliant une seconde extrémité dudit conduit de retour au groupe de traitement d'air, la première ouverture étant décalée par rapport à la seconde ouverture selon une direction longitudinale du véhicule.

En effet, grâce au système de reprise d'air, la première ouverture est éloignée de la seconde ouverture qui débouche dans le groupe de traitement d'air. Par conséquent, la nuisance sonore dans la salle de passagers est réduite.

Selon des modes particuliers de l'invention, le véhicule comprend l'une ou plusieurs des caractéristiques suivantes, prise(s) isolément ou selon toutes les combinaisons techniquement possibles :
- le système de diffusion d'air comprend des conduits latéraux et un premier conduit central reliés à une sortie du groupe de traitement d'air, les conduits latéraux présentant des ouvertures de diffusion dans la salle de passagers ;
- le premier conduit central est dépourvu d'ouvertures débouchant dans la salle de passagers ;
- le système de reprise d'air comprend au moins deux conduits de retour agencés dans ledit espace, chaque conduit de retour reliant la première ouverture respective à la seconde ouverture respective, le premier conduit central s'étendant entre lesdits conduits de retour et parallèlement audits conduits de retour ;
- le véhicule comprend au moins une cabine de conducteur pour un conducteur du véhicule, le système de diffusion d'air comprenant en outre un conduit de cabine reliant le premier conduit central à une ouverture de la cabine de conducteur pour l'alimentation de la cabine de conducteur avec de l'air ;
- l'ouverture de la cabine de conducteur est munie d'un clapet mobile configure pour régler un débit d'air dans la cabine de conducteur ;
- la cabine de conducteur comprend un extracteur configuré pour régler un débit d'air extrait de la cabine de conducteur vers l'extérieur du véhicule ;
- le système de diffusion d'air comprend au moins un élément d'absorption acoustique disposé entre la sortie du groupe de traitement d'air et l'une des ouvertures de diffusion dans la salle de passagers des conduits latéraux ;
- le système de diffusion d'air comprend un dispositif de guidage mobile en translation pour régler un rapport de diffusion d'air entre le premier conduit central et un second conduit central s'étendant selon une direction opposée au premier conduit central ;
- le système de diffusion d'air comprend des dispositifs de réglage aptes à régler un rapport d'une diffusion d'air entre le premier conduit central et les conduits latéraux, chaque dispositif de réglage ayant une première partie fixe par rapport aux conduits latéraux et une seconde partie fixée au dispositif de guidage mobile, la seconde partie modifiant une section minimale entre la sortie du groupe de traitement d'air et les conduits latéraux lors d'une translation du dispositif de guidage mobile ;
- le premier conduit central présente une largeur comprise entre 20% et 33% d'une largeur du véhicule ;
- le système de diffusion d'air est dépourvu de ventilateurs.

L'invention sera mieux comprise à la lecture de la description qui va suivre, donnée uniquement à titre d'exemple et faite en se référant aux dessins annexés, sur lesquels :
- [Fig 1] la figure 1 est une représentation schématique en coupe d'un véhicule selon l'invention ;
- [Fig 2] la figure 2 est une représentation en perspective avec une coupe selon un plan Il de la figure 1, et
- [Fig 3] la figure 3 est une représentation schématique en perspective avec une coupe selon un plan III de la figure 1.

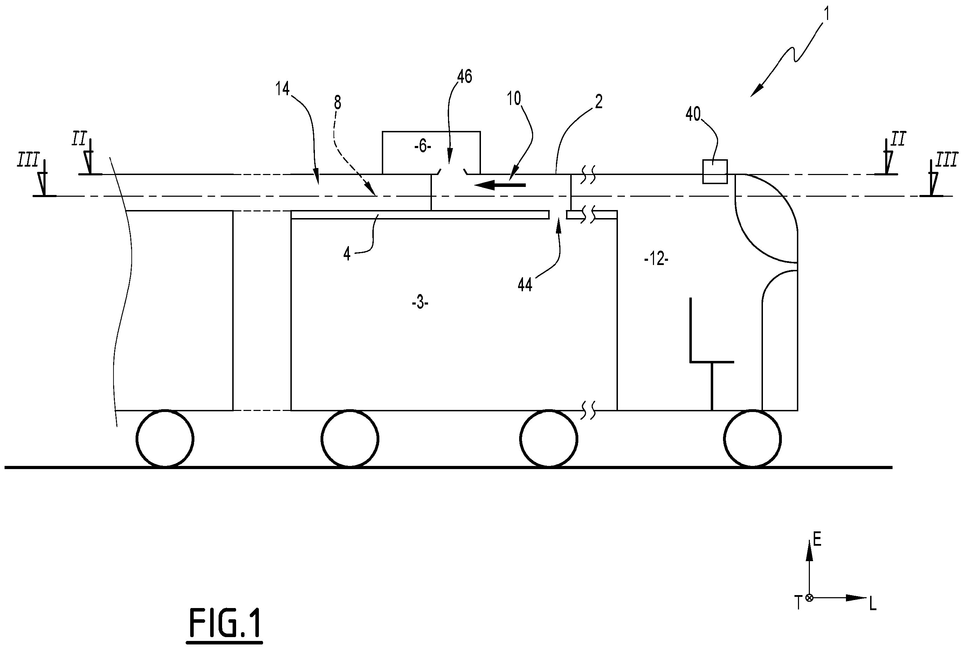

En référence à la figure 1, un véhicule 1 comprend un toit 2 et une salle de passagers 3 pour recevoir des passagers du véhicule 1. Le véhicule 1 comprend en outre un plafond 4 délimitant la salle de passagers 3, notamment selon une direction d'élévation E du véhicule 1.

Le véhicule 1 comprend en outre au moins un groupe de traitement d'air 6 agencé sur le toit 2.

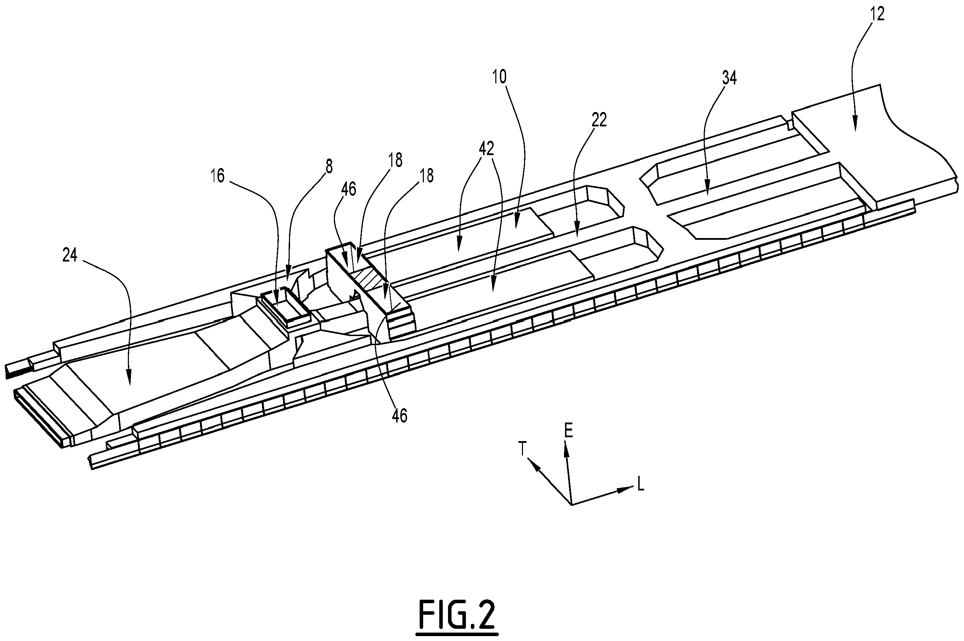

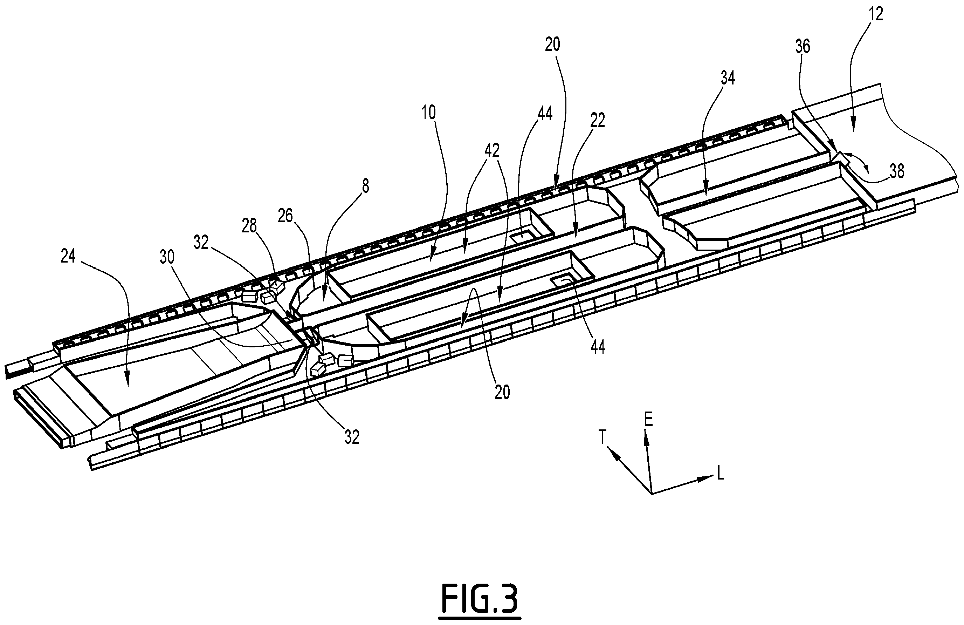

Le véhicule 1 comprend en outre un système de diffusion d'air 8 configuré pour diffuser de l'air à partir du groupe de traitement d'air 6 au sein du véhicule 1. Le véhicule 1 comprend en outre un système de reprise d'air 10 configuré pour récupérer de l'air et le transporter au groupe de traitement d'air 6. Le système de diffusion d'air 8 et le système de reprise d'air 10 sont représentés plus en détail sur les figures 2 et 3.

En outre, le véhicule 1 comprend par exemple une cabine de conducteur 12 configurée pour recevoir un conducteur du véhicule 1.

Le véhicule 1 est par exemple un véhicule ferroviaire. Selon d'autres exemples, le véhicule 1 est un véhicule routier, un navire, ou un véhicule aérien, ou aéronef.

Le véhicule 1 définit une direction longitudinale L correspondant à une direction de circulation du véhicule 1. Le véhicule 1 définit en outre une direction d'élévation E qui est perpendiculaire à la direction longitudinale L, et orientée par exemple verticalement vers le haut lorsque le véhicule 1 circule sur un plan horizontal. Le véhicule 1 définit en outre une direction transversale T perpendiculaire à la direction longitudinale L et à la direction d'élévation E.

Le véhicule 1 présente en particulier une largeur définie selon la direction transversale T.

Le groupe de traitement d'air 6 est par exemple un système du type CVC (de « Chauffage Ventilation et Climatisation ») ou HVAC (de l'anglais « Heating, Ventilation and Air-Conditioning » pour chauffage, ventilation et climatisation).

Le groupe de traitement d'air 6 est configuré pour récupérer de l'air, le traiter et pour le diffuser.

Le groupe de traitement d'air 6 comprend au moins un ventilateur. Par exemple le groupe de traitement d'air 6 comprend un ventilateur à la fois pour récupérer de l'air depuis le système de reprise d'air 10 et pour diffuser de l'air traité par le système de diffusion d'air 8. En outre, le groupe de traitement d'air 6 comprend des moyens de traitement d'air, connus en soi.

Le véhicule 1 définit un espace 14 délimité entre le toit 2 et le plafond 4. Par exemple, le toit 2 et le plafond 4 s'étendent parallèlement l'un par rapport à l'autre, et avec une distance sensiblement constante selon la direction d'élévation E.

Le système de diffusion d'air 8 et le système de reprise d'air 10 sont agencés dans l'espace 14.

Le système de diffusion d'air 8 est apte à diffuser de l'air traité provenant du groupe de traitement d'air 6 dans la salle de passagers 3. En complément, le système de diffusion d'air 8 est en outre apte à diffuser de l'air traité dans la cabine de conducteur 12.

En référence à la figure 2, le système de diffusion d'air 8 présente par exemple une ouverture 16, de préférence une seule ouverture 16, vers le groupe de traitement d'air 6. Le système de diffusion d'air 8 est ainsi apte à recevoir de l'air traité depuis le groupe de traitement 6 par l'ouverture 16.

Selon un exemple et en référence à la figure 2, le système de reprise d'air 10 présente des ouvertures 18 vers le groupe de traitement d'air 6. Par les ouvertures 18, le système de reprise d'air 10 est ainsi apte à transmettre de l'air vers le groupe de traitement 6 pour un traitement de cet air.

En référence à la figure 3, le système de diffusion d'air 8 comprend des conduits latéraux 20, par exemple deux conduits latéraux 20. Les conduits latéraux 20 s'étendent notamment parallèlement l'un par rapport à l'autre, et de préférence aux extrémités opposées du véhicule 1 selon la direction transversale T.

Le système de diffusion d'air 8 comprend en outre par exemple un premier conduit central 22. Selon un exemple, le système de diffusion d'air 8 comprend en outre un second conduit central 24 s'étendant selon une direction opposée au premier conduit central 22. Par exemple, chacun parmi le premier conduit central 22 et le second conduit central 24 s'étend sensiblement selon la direction longitudinale L.

Les conduits latéraux 20, le premier conduit central 22, et le second conduit central 24 sont reliés à l'ouverture 16 formant une sortie du groupe de traitement d'air 6.

De préférence, les conduits latéraux 20 s'étendent sur la totalité d'une longueur de la salle de passagers 3 selon la direction longitudinale L.

Les conduits latéraux 20 présentent par exemple des ouvertures de diffusion 26 aptes à diffuser de l'air dans la salle de passagers 3. De préférence, les conduits latéraux 20 présentent les ouvertures de diffusion 26 sur une totalité de la longueur de la salle de passagers 3, et/ou par exemple à une distante constante entre deux ouvertures de diffusion voisines. En particulier, les conduits latéraux 20 présentent également des ouvertures de diffusion 26 à une position selon la direction longitudinale L présentant la sortie du groupe de traitement d'air 6 dans le système de diffusion d'air 8, à savoir notamment l'ouverture 16. Cela permet en particulier de garantir une alimentation avec de l'air traité partout dans la salle de passagers 3, y compris au niveau de la sortie du groupe de traitement d'air 6 dans le système de diffusion d'air 8.

De préférence, le premier conduit central 22 et/ou le second conduit central 24 est/sont dépourvu(s) d'ouvertures débouchant dans la salle de passagers 3. De préférence, le système de diffusion d'air 8 est apte à diffuser de l'air dans la salle de passagers 3 uniquement par les conduits latéraux 20.

Par exemple, le premier conduit central 22 présente une largeur comprise entre 20% et 33% d'une largeur du véhicule 1 selon la direction transversale T. Cela permet en particulier de transmettre de l'air traité via une distance élevée selon la direction longitudinale L, par exemple vers la cabine de conducteur 12.

De préférence, le système de diffusion d'air 8 est dépourvu de ventilateurs. Notamment, lorsque la largeur du premier conduit central 22 est comprise entre 20% et 33% de la largeur du véhicule 1, le système de diffusion d'air 8 est apte à transporter de l'air jusqu'à la cabine de conducteur 12, sans ventilateur par exemple dans premier conduit central 22.

Le système de diffusion d'air 8 comprend par exemple en outre au moins un élément d'absorption acoustique 28 disposé entre la sortie du groupe de traitement d'air 6 formé par l'ouverture 16, et l'une des ouvertures de diffusion 26 dans la salle de passagers 3 des conduits latéraux 20. Par exemple, le système de diffusion d'air 8 comprend trois éléments d'absorption acoustique 28 d'un côté de la sortie du groupe de traitement d'air 6 et trois éléments d'absorption acoustique 28 de l'autre côté de cette sortie.

Chaque élément d'absorption acoustique 28 présente par exemple la forme d'une brique.

Chaque élément d'absorption acoustique 28 est configuré pour absorber au moins partiellement des nuisances sonores par exemple du ventilateur du groupe de traitement d'air 6. Par exemple, chaque élément d'absorption acoustique 28 est fait en un matériau apte à absorber des ondes acoustiques.

Par exemple, chaque élément d'absorption acoustique 28 est disposé par rapport à au moins un élément d'absorption acoustique 28 de manière à former une fente entre ces éléments, apte à permettre le passage de l'air de la sortie du groupe de traitement d'air 6 aux ouvertures de diffusion 26.

Les éléments d'absorption acoustique 28 permettent en particulier d'obtenir une absorption de nuisances sonores du ventilateur du groupe de traitement d'air 6, afin de réduire les nuisances sonores transmises vers la salle de passagers 3 à partir du groupe de traitement d'air 6.

Le système de diffusion d'air 8 comprend par exemple en outre un dispositif de guidage 30 mobile en translation selon la direction longitudinale L. Le dispositif de guidage 30 est configuré pour régler un rapport de diffusion d'air entre le premier conduit central 22 et le second conduit central 24.

Par exemple, le dispositif de guidage 30 présente une surface en forme de rampe s'étendant vers le second conduit central 24. La rampe forme en particulier une partie arrondie du dispositif de guidage 30 adaptée pour guider la fraction de l'air débouchant dans le second conduit central 24. La surface en forme de rampe permet ainsi en particulier d'améliorer le guidage de l'air depuis le groupe de traitement d'air 6 vers le second conduit central 24.

Le dispositif de guidage 30 présente par exemple en outre une surface s'étendant vers le premier conduit central 24, qui est dépourvue d'une rampe. Cette surface est ainsi par exemple une face parallèle à la direction d'élévation E.

Selon un exemple, le système de diffusion d'air 8 comprend en outre des dispositifs de réglage 32 aptes à régler un rapport d'une diffusion d'air entre le premier conduit central 22 et les conduits latéraux 20. Chaque dispositif de réglage 32 comprend une première partie qui est fixe par rapport aux conduits latéraux 20, et une seconde partie qui est fixée au dispositif de guidage 30, notamment fixée à la surface du dispositif de guidage 30 s'étendant vers le premier conduit central 24. De préférence, la seconde partie modifie une section minimale entre la sortie du groupe de traitement d'air 6 formée par l'ouverture 16, et les conduits latéraux 20, lors d'une translation du dispositif de guidage 30. En particulier, lorsque le dispositif de guidage 30 fait une translation selon la direction longitudinale L, le ou chaque dispositif de réglage 32 modifie la section minimale débouchant dans les conduits latéraux 20. De cette manière, le rapport d'un débit d'air transmis dans le premier conduit central 22 par rapport à un débit d'air transmis dans les conduits latéraux 20 est modifié en fonction de la position en translation du dispositif de guidage 30.

Selon un exemple, le système de diffusion d'air 8 comprend en outre un conduit de cabine 34 reliant le premier conduit central 22 à une ouverture 36 de la cabine de conducteur 12 pour une alimentation de la cabine de conducteur 12 avec de l'air reçu par le groupe de traitement d'air 6.

Cela permet en particulier d'alimenter la cabine de conducteur 12 par le même groupe de traitement d'air 6 alimentant la salle de passagers 3 avec de l'air traité. En particulier, cela permet de supprimer par exemple un groupe de traitement d'air 6 additionnel dédié seulement à l'alimentation de la cabine de conducteur 12.

L'ouverture 36 de la cabine de conducteur 12 est par exemple munie d'un clapet mobile 38, visible par exemple sur la figure 3. Le clapet mobile 38 est par exemple configuré ouvrir ou fermer au moins partiellement l'ouverture 36. Le clapet mobile 38 est par exemple configuré pour être contrôlé en fonction d'un besoin d'air dans la cabine de conducteur 12. Selon un autre exemple, ou en complément, le clapet mobile 38 est configuré pour fermer par exemple en cas d'une détection d'un incendie dans la salle de passagers 3 ou ailleurs dans le véhicule 1. Cela permet ainsi de garantir qu'aucune fumée ne rentre dans la cabine de conducteur 12 lors d'un incendie.

Selon un exemple, la cabine de conducteur 12 comprend en outre un extracteur 40, visible par exemple sur la figure 1, configuré pour régler un débit d'air extrait de la cabine de conducteur 12 vers l'extérieur du véhicule 1.

De préférence, le véhicule 1 est dépourvu de conduit reliant la cabine de conducteur 12 à une entrée du groupe de traitement d'air 6 pour une reprise de l'air par le groupe de traitement 6 au vu d'un traitement de cet air.

Le système de reprise d'air 10 comprend au moins un conduit de retour 42. Par exemple, le système de reprise d'air 10 comprend deux conduits de retour 42.

Le ou chaque conduit de retour 42 s'étend en particulier selon la direction longitudinale L entre une première extrémité et une seconde extrémité du conduit de retour 42 concerné.

Chaque conduit de retour 42 présente par exemple une section rectangulaire dans un plan perpendiculaire à la direction longitudinale L.

En référence aux figures 1 et 3, le système de reprise d'air 10 définit au moins une première ouverture 44 reliant la salle de passagers 3 à la première extrémité du conduit de retour 42 concerné. Le système de reprise d'air 10 définit en outre au moins une seconde ouverture 46, visible en particulier sur les figures 1 et 2, reliant la seconde extrémité du conduit de retour 42 au groupe de traitement d'air 6, en particulier par l'ouverture 18. En particulier, chaque conduit de retour 42 s'étend selon la direction longitudinale L entre la première extrémité reliée à la première ouverture 44 et la seconde extrémité reliée à la seconde ouverture 46.

La première ouverture 44 est décalée par rapport à la seconde ouverture 46 selon la direction longitudinale L du véhicule 1.

Par exemple, première ouverture 44 et/ou la seconde ouverture 46 présente une section rectangulaire, circulaire ou elliptique.

De préférence, le système de reprise d'air 10 comprend deux conduits de retour 42 agencés dans l'espace 14, et s'étendant parallèlement l'un par rapport à l'autre. Chaque conduit de retour 42 relie la première ouverture 44 respective à la seconde ouverture 46 respective.

De préférence, le premier conduit central 22 s'étend entre les deux conduits de retour 42 et parallèlement aux conduits de retour 42.

De préférence, le ou chaque conduit de retour 42 s'étend entre le premier conduit central 22 et le conduit latéral 20 respectif.

Cela permet ainsi d'obtenir un agencement efficace en termes d'espace occupé par le système de diffusion d'air 8 et le système de reprise d'air 10.

Bien entendu, d'autres modes de réalisation peuvent être envisagés.

## Revendications

1. Véhicule (1), notamment véhicule ferroviaire, comprenant un toit (2) et une salle de passagers (3) pour des passagers, le véhicule (1) comprenant en outre un plafond (4) délimitant la salle de passagers (3), un espace (14) étant défini entre le toit (2) et le plafond (4), le véhicule (1) comprenant en outre au moins un groupe de traitement d'air (6) agencé sur le toit (2),
le véhicule (1) comprenant en outre un système de diffusion d'air (8) agencé dans ledit espace (14) apte à diffuser de l'air provenant du groupe de traitement d'air (6) dans la salle de passagers (3), le véhicule (1) comprenant en outre un système de reprise d'air (10) apte à conduire de l'air de la salle de passagers (3) au groupe de traitement d'air (6) pour un traitement,
le système de reprise d'air (10) comprenant au moins un conduit de retour (42) agencé dans ledit espace (14), une première ouverture (44) reliant la salle de passagers (3) à une première extrémité dudit conduit de retour (42), et une seconde ouverture (46) reliant une seconde extrémité dudit conduit de retour (42) au groupe de traitement d'air (6), la première ouverture (44) étant décalée par rapport à la seconde ouverture (46) selon une direction longitudinale (L) du véhicule (1).

2. Véhicule (1) selon la revendication 1, dans lequel le système de diffusion d'air (8) comprend des conduits latéraux (20) et un premier conduit central (22) reliés à une sortie du groupe de traitement d'air (6), les conduits latéraux (20) présentant des ouvertures de diffusion (26) dans la salle de passagers (3), de préférence le premier conduit central (22) étant dépourvu d'ouvertures débouchant dans la salle de passagers (3).

3. Véhicule (1) selon la revendication 2, dans lequel le système de reprise d'air (10) comprend au moins deux conduits de retour (42) agencés dans ledit espace (14), chaque conduit de retour (42) reliant la première ouverture respective (44) à la seconde ouverture respective (46), le premier conduit central (22) s'étendant entre lesdits conduits de retour (42) et parallèlement audits conduits de retour (42).

4. Véhicule (1) selon la revendication 2 ou la revendication 3, comprenant en outre au moins une cabine de conducteur (12) pour un conducteur du véhicule (1), le système de diffusion d'air (8) comprenant en outre un conduit de cabine (34) reliant le premier conduit central (22) à une ouverture (36) de la cabine de conducteur (12) pour l'alimentation de la cabine de conducteur (12) avec de l'air.

5. Véhicule (1) selon la revendication 4, dans lequel l'ouverture (36) de la cabine de conducteur (12) est munie d'un clapet mobile (38) configure pour régler un débit d'air dans la cabine de conducteur (12).

6. Véhicule (1) selon la revendication 4 ou la revendication 5, dans lequel la cabine de conducteur (12) comprend un extracteur (40) configuré pour régler un débit d'air extrait de la cabine de conducteur (12) vers l'extérieur du véhicule.

7. Véhicule (1) selon l'une quelconque des revendications 2 à 6, dans lequel le système de diffusion d'air (8) comprend au moins un élément d'absorption acoustique (28) disposé entre la sortie du groupe de traitement d'air (6) et l'une des ouvertures de diffusion (26) dans la salle de passagers (3) des conduits latéraux (20).

8. Véhicule (1) selon l'une quelconque des revendications 2 à 7, dans lequel le système de diffusion d'air (8) comprend un dispositif de guidage mobile (30) en translation pour régler un rapport de diffusion d'air entre le premier conduit central (22) et un second conduit central (24) s'étendant selon une direction opposée au premier conduit central (22).

9. Véhicule (1) selon la revendication 8, dans lequel le système de diffusion d'air (8) comprend des dispositifs de réglage (32) aptes à régler un rapport d'une diffusion d'air entre le premier conduit central (22) et les conduits latéraux (20), chaque dispositif de réglage (32) ayant une première partie fixe par rapport aux conduits latéraux (20) et une seconde partie fixée au dispositif de guidage mobile (30), la seconde partie modifiant une section minimale entre la sortie du groupe de traitement d'air (6) et les conduits latéraux (20) lors d'une translation du dispositif de guidage mobile (30).

10. Véhicule (1) selon l'une quelconque des revendications 2 à 9, dans lequel le premier conduit central (22) présente une largeur comprise entre 20% et 33% d'une largeur du véhicule (1), de préférence le système de diffusion d'air (8) étant dépourvu de ventilateurs.
